# EUROPEAN PATENT APPLICATION

(11) **EP 0 670 240 A1**
(43) Date of publication of application: **06.09.1995**
(21) Application number: 95102385.2
(22) Date of filing: 21.02.1995
(51) Int. Cl.: B60N 2/44

(54) **Vehicle seat cushion having a lateral bolster adjustment mechanism**

(30) Priority: 28.02.1994 US 202533
(71) Applicant: HOOVER UNIVERSAL INC., Plymouth, Michigan 48170 (US)
(72) Inventor: Koester, Daniel J., Ann Arbor, Michigan 48103 (US); Reed, William G., Walled Lake, Michigan 48390 (US); Vo, Benny T., Ypsilanti, Michigan 48197 (US); Potes, Duane E., Jr., Adrian, Michigan 49221 (US)
(74) Representative: Bergen, Klaus, Dipl.-Ing.

(57) **Abstract**

A bolster adjustment mechanism (12) for a vehicle seat assembly (10, 70, 85) includes a ratchet and pawl mechanism (18), or a drive motor (52), for rotating an outboard (13) and/or inboard (14) lateral bolster for permitting incremental adjustment of the bolsters between a full up position, in which the bolsters provide a substantial lateral support to the thigh and pelvis of an occupant of the seat, and a full down position in which the uppermost surface of the outboard bolster is located below the level of the cushion upper surface for providing easy ingress into or egress from a vehicle in which the vehicle seat assembly is located.

## Description

### Background of the Invention

This invention relates to vehicle seat assemblies, and more particularly to a vehicle seat cushion having a lateral bolster adjustment mechanism.

Bucket seats for all types of vehicles frequently provide lateral bolsters in the seat cushion that are either contoured into the seat cushion or differentiated from the cushion with foam and trim. The purpose of the bolsters is to provide improved pelvic stability, thigh support and thus improved comfort. Sport cars and sport utility vehicles frequently incorporate aggressive or high lateral bolsters in the bucket seats, sometimes including pneumatic adjusters in the bolsters allowing the occupant to adjust the bolster higher, inwardly, or both. Existing mechanisms of this type tend to provide only limited additional support to the pelvis and thighs and are usually a significant barrier to ingress into or egress from a vehicle.

### Summary of the Invention

The present invention provides a lateral bolster adjustment mechanism for vehicle seat assemblies. The bolster adjustment mechanism provides a means of adjusting the outboard and/or the inboard bolster within a range of positions from a full up position to full down position. At the full up position, the inboard and outboard bolsters provide a substantial amount of lateral support to the thigh and pelvis. At the full down position, the upper surface of the outboard bolster is located below the level of the interior cushion surface to facilitate ingress into and egress from the vehicle. The seat cushion trim extends down into the gap between the bolsters and the center portion of the seat cushion on both sides to allow a more even pressure distribution when the occupant is seated. Alternatively, the bolster can rotate within the trim cover. The bolster adjustment includes user operated mechanism which permits the bolster to be adjusted to a plurality of discrete positions between the full up position and the full down position. In accordance with one embodiment, the locking mechanism includes a ratchet system that provides incremental movement over a predetermined range of motion for the bolster. The bolster has a recess at its lower outboard side, defining a gripping surface, enabling an occupant of the seat to grasp the bolster and easily adjust the position of the bolster by gripping and pulling the bolster upwardly and inwardly into engagement with the thigh of the occupant. The bolster can be returned to the full down position by releasing the locking mechanism.

In another embodiment, the bolster is motor driven between full up and full down positions. In this embodiment, the bolster is driven to the full down position in response to the opening of the vehicle door adjacent to the bolster and is driven to the full up position in response to the door being closed. A manual switch is provided for manipulation by the occupant of the seat to enable adjustment of the bolsters for comfort.

Further in accordance with the invention, both the inboard and outboard lateral bolsters are adjustable. The bolster adjustment mechanism is also applied to bench type vehicle seats.

The invention consists of certain novel features and structural details hereinafter fully described, illustrated in the accompanying drawings, and particularly pointed out in the appended claims, it being understood that various changes in the details may be made without departing from the spirit, or sacrificing any of the advantages of the present invention.

### Description of the Drawings

FIG. 1 is a side elevation view of a vehicle right seat assembly, partially cut away to illustrate the bolster adjustment mechanism provided by the present invention;
FIG. 2 is a front end view of the vehicle seat assembly shown in FIG. 1 and illustrating the range of adjustment of the outboard bolster;
FIG. 3 is an enlarged, fragmentary view in section illustrating details of the bolster adjustment mechanism;
FIG. 4 is a fragmentary view illustrating a portion of the seat frame structure and the manner in which the bolster adjustment mechanism is mounted on the seat frame structure;
FIG. 5 is a side view of the outboard bolster illustrating the gripping slot;
FIG. 6 is a front end view of a vehicle right seat assembly that is similar to the seat assembly shown in FIG. 2, but wherein both the inboard and outboard lateral bolsters are adjustable;
FIG. 7 is an embodiment of the bolster adjustment mechanism including a motor driven mechanism;
FIG. 8 is an embodiment of the bolster adjustment mechanism including a plunger actuated mechanism;
FIG. 9 is a view of a bench seat incorporating a lateral holster adjustment mechanism in accordance with the present invention; and,
FIG. 10 is view of a bench seat incorporating a bolster adjustment mechanism in accordance with the present invention.

### Description of Preferred Embodiments

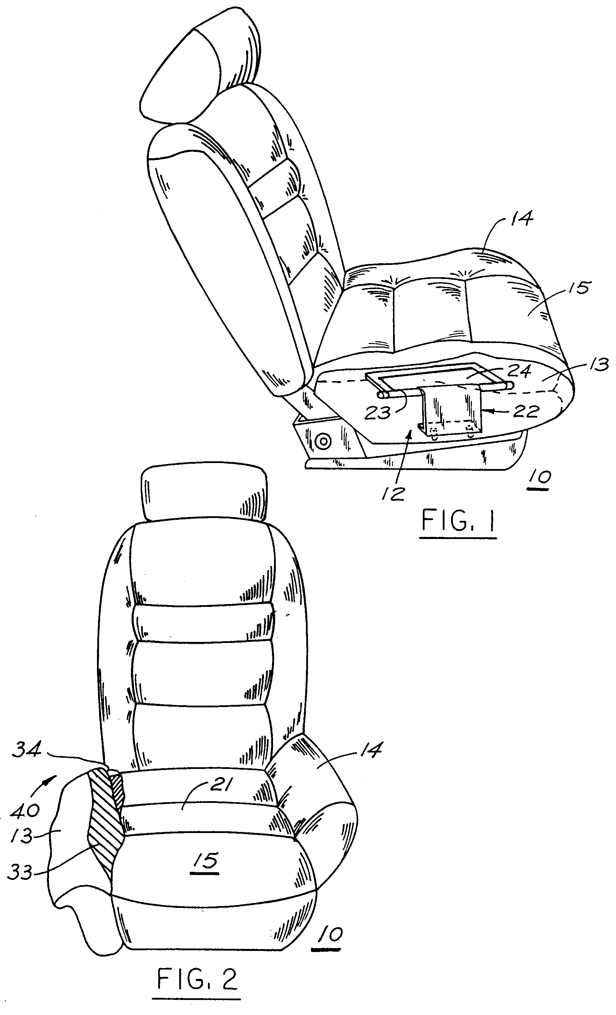

Referring to the drawings, FIG. 1 is a perspective view of a vehicle seat assembly 10, incorporating the lateral bolster adjustment mechanism 12 provided by the present invention. The bolster adjustment mechanism 12 permits adjustment in the width of the seat cushion 15 to provide improved accommodation for wide and narrow occupants.

The vehicle seat assembly 10 includes an outboard bolster 13 and an inboard bolster 14. The outboard bolster 13 includes the bolster adjustment mechanism 12 and is adjustable within a range of discrete positions from a high or full up position, which is the mirror image or is symmetrically opposite to the position of the inboard bolster 14 shown in FIG. 2, to a low or full down position, as shown in FIG. 2 where the top surface of the bolster is below the "A"-surface 21 of the seat cushion 15. The inboard bolster 14 is fixed in a position corresponding to the full up position for the outboard bolster 13. At the full up position, the inboard and outboard bolsters provide a substantial amount of lateral support to the thigh and pelvis. At the full down position, the upper surface of the outboard bolster 13 is located below the level of the interior cushion surface 21, providing easy ingress into and egress from the vehicle.

Referring to FIGS. 2-4, the bolster adjustment mechanism 12 includes a ratchet 16 and a pawl 17 which form a locking mechanism 18 which provides for incremental adjustment of the outboard bolster 13 from the full up position to the full down position. The bolster adjustment mechanism 12 permits the outboard bolster 13 to be pivoted over a range of about 80° which extends from about 70° from the horizontal at the full up position to about -10° from the horizontal at the full down position. The number of positions intermediate the full up position and the full down position is dependent upon the design of the locking mechanism, and in the exemplary embodiment is defined by the number of teeth of the ratchet 16.

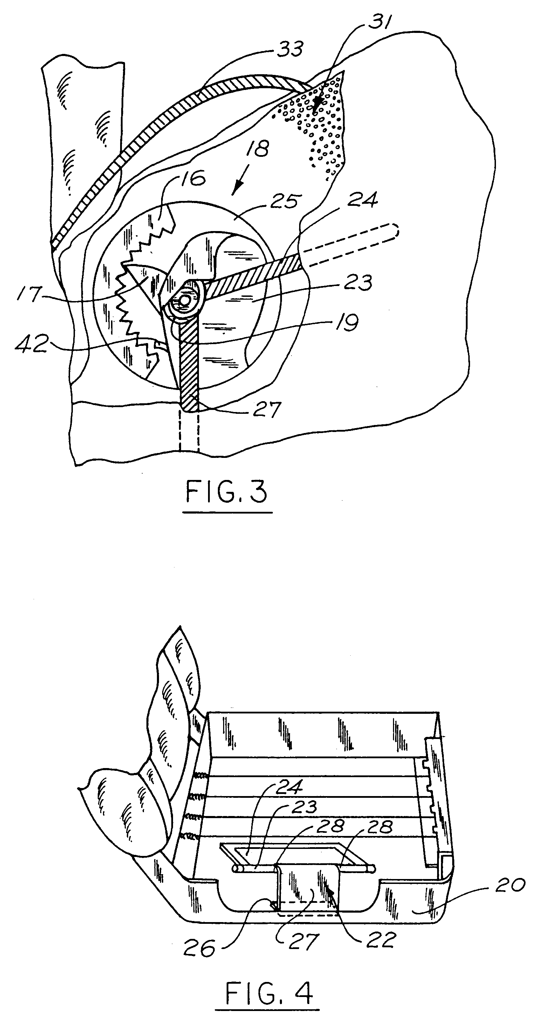

As is shown in FIG. 4, the bolster adjustment mechanism 12 is attached to and serves as part of the seat frame structure 20. The bolster adjustment mechanism 12 includes a mounting bracket 22, a shaft 23, and a foam support paddle 24 which extends into the foam. The mounting bracket 22 is a metal stamping having a foot 26 and an upright portion 27 having a pair of guides 28 which support the shaft near each end of the shaft. The mounting bracket 22 supports the shaft 23 above the seat frame structure 20, the guides 28 permitting the shaft 23 to pivot relative to the seat frame structure. The foot portion 26 of the mounting bracket is secured to the seat frame structure in a suitable manner. It is apparent that the shaft can be rotatably supported adjacent to the upper surface of the seat frame and be located below the bolster rather than within the bolster. The ratchet 16 is secured to the upright portion 27 of the mounting bracket near its upper end. The shaft 23 carries the pawl 17 near one end. The pawl is biased into engagement with the ratchet 16 by a bias spring 19. The foam support paddle 24 is a flat, generally rectangular member which is inserted into a slot provided in the foam and secured to the foam by adhesive or in some other suitable manner or may be molded into the foam. The foam support paddle 24 is fixedly mounted on the shaft 23 for pivoting movement with the shaft relative to the seat frame structure 20. The foam support paddle 24 secures the foam cushion portion 31 of the bolster 14 to the shaft so that the outboard bolster 13 pivots with the shaft 23 relative to the seat frame structure. The foam layer of the bolster is trimmed with upholstery or trim material 33 in the conventional. The center portion of the seat cushion 36 of the vehicle seat assembly 10 is supported from below by a fore and aft suspension may attached to the seat frame in the conventional manner. The bolster cushion trim 33 extends down into the gap 34 between the bolster and the seat cushion 36 of the seat assembly 10, as shown in FIG. 2, to allow a more even pressure distribution when the occupant is seated. The trim material may be pleated or may be or a fabric that is capable of stretching to allow for the rotating motion of the bolster. Alternatively, the bolster can rotate within the trim cover.

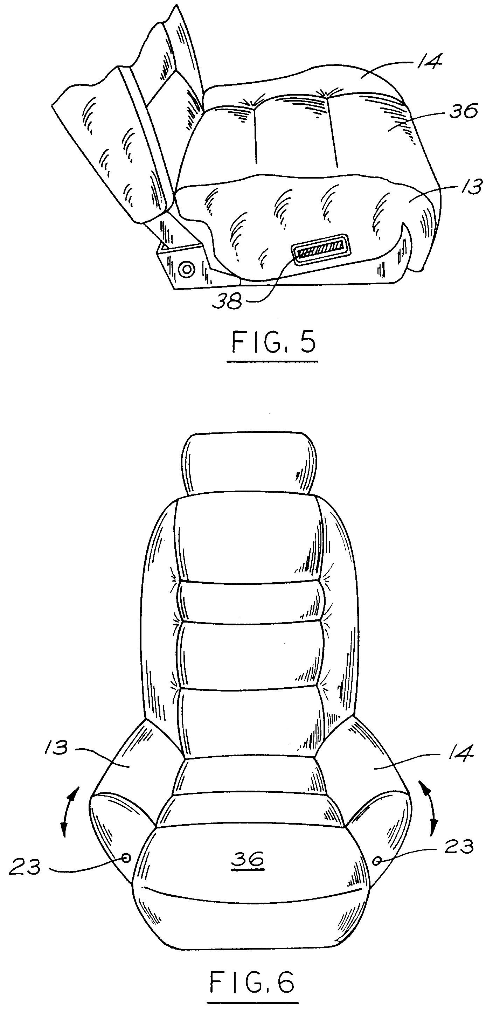

Referring to FIG. 5, the outboard bolster 13 has a recess 38 at its lower outboard side, defining a gripping surface or notch, enabling an occupant of the seat to grasp the bolster and easily adjust the position of the outboard bolster 13. The outboard bolster 13 is movable from the low position, or from a position intermediate the low and high position, by gripping and pulling the bolster upwardly and inwardly in the direction of the arrow 40 shown in FIG. 2. The bolster 13 can be returned to the low position by first pivoting the bolster 13 to the full up position, where the pawl 17 engages a release member 42, shown in FIG. 3, which defines the full up position limit of travel for the bolster. When the bolster is moved to the full up position, the engagement of the pawl with the release member 42 causes the pawl to be moved and temporarily maintained out of engagement with the ratchet 16, permitting the bolster 13 to be returned to the low position. At the low position, the pawl 17 is moved into engagement with the ratchet 16 by the bias spring 19.

Alternatively, the pawl release feature can be accomplished by an activation release cable (not shown) connected to the pawl and a handle connected to the cable and located near the front of the seat convenient for access by an occupant of the seat operated by the occupant of the seat.

Referring to FIG. 6, in accordance with a preferred embodiment, the inboard bolster 14 as well as the outboard bolster 13 are adapted for movement out of the way to facilitate ingress into and egress out of the vehicle. In this embodiment, identical bolster adjustment assemblies are provided on opposite sides of the seat, the two bolster adjustment assemblies operating in the manner of bolster adjustment assembly 12 of seat assembly 10. The inboard bolster 14 is mounted on the seat frame structure by a bolster adjustment mechanism which is the mirror image of but otherwise identical to the bolster adjustment mechanism 12. The bolsters are repositioned by the occupant of the seat simultaneously pivoting the bolsters upwardly and inwardly until the bolsters are snug against the thighs of the seat occupant. The bolsters can be lowered from this position by first raising the bolsters to the full up position at which position, the ratchet mechanism is released, permitting the two bolsters to be moved to the full down position.

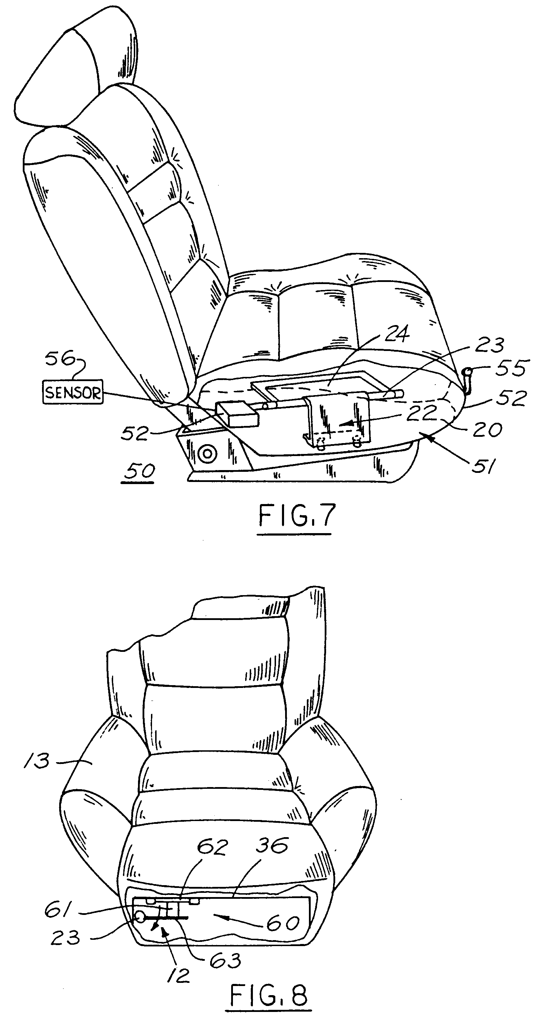

Referring to FIG. 7, there is illustrated an embodiment for a seat assembly 50 in which the bolster adjustment mechanism 51 is driven by a bidirectional motor 52 which is mounted on the seat frame, for example. The motor has a shaft 54 that is coupled to the shaft 23 by a reduction gear mechanism to provide low speed, high torque rotation of the bolster. In the seat assembly 50 illustrated in FIG. 7, the motor is energized in response to the operation of a toggle switch 55 that is operable manually by an occupant of the seat. The switch 55 is mounted in a location convenient to the reach of an occupant of the seat. A further switch or sensor 56 associated with the vehicle door (not shown) that is adjacent to the bolster enables the bolster to be driven to the full down position in response to the opening of the vehicle door that is adjacent to the bolster and to be driven to the full up position in response to the vehicle door being closed. The switch or sensor 56 provides a first indication whenever the vehicle door is open and a second indication when the vehicle door is closed. The manually operable switch 55 enables the occupant of the seat to adjust the bolster to a position of comfort. The seat assembly 50 includes a control apparatus 59 associated with the motor 52, and including limit switches (not shown) connected in the drive circuit for the motor for deenergizing the motor when the shaft 23 has rotated the bolster to the full up position or the full down position, thereby limiting the rotation of the bolster to the desired range.

In accordance with an alternative arrangement illustrated in FIG. 8, the bolster adjustment mechanism 12 is actuated by a plunger mechanism 60 which is operated in response to an individual sitting on the seat. The plunger mechanism 60 includes a plunger rod 61 which depends from a plate 62 secured to the underside of the seat cushion 36 and a lever 63 which is coupled to the shaft 23. Preferably, the bolster adjustment mechanism includes a locking mechanism such as a pawl and ratchet, for maintaining the bolster at a position to which it has been rotated in response to an individual sitting in the seat. When an individual sits on the seat, the seat is depressed, depressing the plunger rod 61 to pivot the lever 63 which rotates the shaft 23. When the shaft 23 is rotated, the outboard and/or inboard bolsters are rotated inwardly to engage the thighs of the occupant of the seat. This arrangement can include an activation release lever (not shown) to release the locking means of the bolster adjustment mechanism to permit the occupant of the seat to adjust the bolster for comfort.

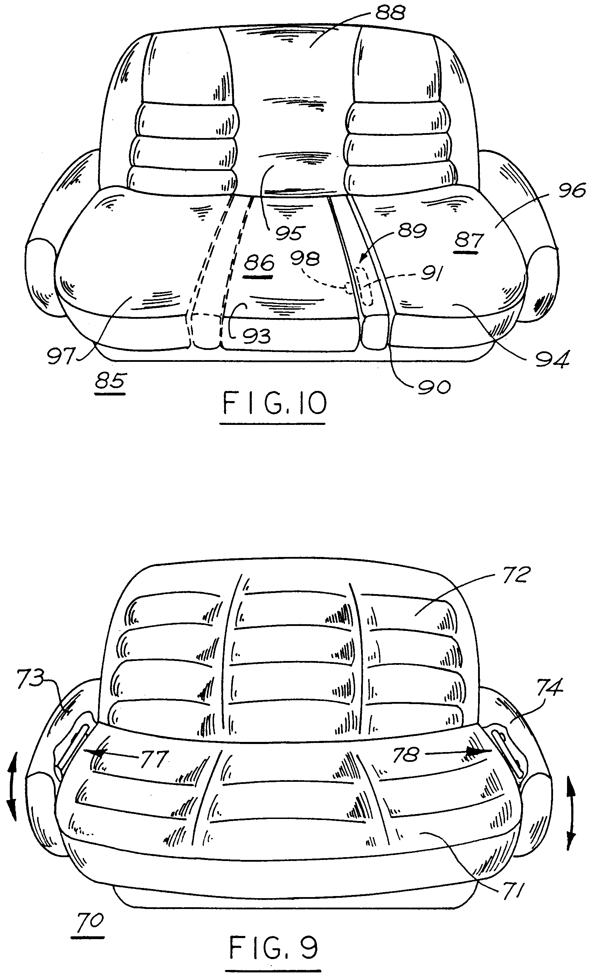

Referring to FIG. 9, the bolster adjustment mechanism is shown applied to a bench type seat 70 for the front or rear of the passenger compartment of a vehicle. The bench seat 70 has a seat cushion 71, a seat back 72, a first lateral bolster 73 located at the right hand side of the bench seat and a second lateral bolster 74 located at the left hand side of the bench seat. The bolsters 73 and 74 include respective bolster adjustment mechanisms 77 and 78 for adjusting the lateral position of the two bolsters 73 and 74 relative to the upper surface 76 of the seat cushion. The bolster adjustment mechanism 77 is mounted in the bolster 73 and the bolster adjustment mechanism 78 is mounted in bolster 74. The adjustment mechanisms are operable in the manner of bolster adjustment mechanism 12 to provide incremental lateral adjustment of the associated bolsters from a full up position to a full down position. The seat assembly may include fixed intermediate bolsters (not shown) which are located spaced inwardly, at equal distances from the sides of the bench seat and cooperating with the adjustable bolsters to define three seating areas for the bench seat.

Referring to FIG. 10, the adjustable bolster arrangement is shown applied to a bench type vehicle seat assembly 85 for defining left and right seating areas for the bench seat. The seat assembly 85 has a seat cushion portion 86 which forms about 60% of the seat cushion for the seat, a seat cushion portion 87 which forms the remaining portion (i.e. about 40%) of the seat, and a seat back 88. The adjustable bolster 89 is located at the junction between the seat cushion portions 86 and 87 of the seat assembly. A pocket or recess 90 is formed at the junction The bolster 89 includes a bolster adjustment mechanism 91 which is located within the bolster and which permits adjustment of the position of the bolster relative to the upper or "A"-surfaces 93 and 94, respectively, of the seat cushion portions between a full down position and a full up position. In the full down position, which is illustrated in FIG 10, the upper surface 95 of the bolster 89 is substantially horizontal so that it is flush or level with the upper or "A"-surfaces 93 and 94, respectively, of the seat cushion portions whereby the bench seat has the appearance of a flat, continuous seat. In the full up position, the bolster 89 divides the seat cushion into left and right hand portions 96 and 97. The bolster adjustment mechanism operates in the manner of bolster adjustment mechanism 12. The bolster is normally stowed in the pocket 90 and can be rotated upwardly and outwardly by pulling on a strap 98 secured to the bolster. The bolster can be returned to its full down position by first rotating the bolster to its full up position to effect release of the ratchet system, and then moving the bolster back down to its stowed position in the pocket 90. A further adjustable bolster (not shown) may be provided at the left hand side of the bench seat to permit the bench seat to be divided into three discrete seat portions.

Thus, it has been shown that the present invention has provided a lateral bolster adjustment mechanism which permits incremental adjustment of the position of the outboard and/or inboard lateral bolsters of a vehicle seat assembly from a full up position, where the bolsters provide a substantial lateral support to the thigh and pelvis of an occupant of the seat, to a full down position where one or both of the bolsters are located substantially flush with the level of the interior cushion surface of the vehicle seat assembly. The bolster adjustment arrangement is particularly suitable for sport or recreational type vehicles which generally have bucket seats and which incorporate aggressive or high bolsters into the seat assemblies. However, the bolster adjustment mechanism can be applied to seating for passenger type vehicles or trucks as well as to bench type vehicle seats and/or split bench type vehicle seats to separate the seat into distinct portions.

While particular embodiments of the invention have been described, various changes and modifications can be made without departing from the spirit and scope of the invention as defined by the following claims.

## Claims

1. In a vehicle seat assembly (10) having a seat cushion (15) and a seat back, said seat cushion having a first lateral bolster (13), a second lateral bolster (14) and a cushion upper surface (21) extending between said first and second lateral bolsters, a bolster adjustment means (12) for permitting adjustment of the height of at least one of said bolsters relative to said cushion upper surface, said bolster adjustment means comprising:
an adjustment mechanism (18, 22-24) associated with said one bolster for providing adjustment in the position of said one bolster between a full up position, in which said one bolster provides substantial lateral support to the thigh and pelvis of an occupant of the seat, and a full down position, in which the uppermost surface of said one bolster is located below the level of said cushion upper surface for providing easy ingress into or egress of an occupant from a vehicle in which the vehicle seat assembly is located.

2. The vehicle seat assembly according to claim 1, wherein said adjustment mechanism includes means (16, 17) for providing incremental adjustment of said one bolster to a plurality of adjustment positions from said full up position to said full down position.

3. The vehicle seat assembly according to claim 2, wherein said means for providing incremental adjustment includes ratchet means (16) and pawl means (17) cooperating with said ratchet means to define said plurality of adjustment positions over an adjustment range, allowing said one bolster to be rotated over a range of about 80°.

4. The vehicle seat assembly according to claim 3, wherein said one bolster is rotated over a range from about 70° from the horizontal at said full up position to about -10° from the horizontal at said full down position.

5. The vehicle seat assembly according to claim 2, wherein said adjustment mechanism includes an elongated shaft (23) coupled to said means for providing incremental adjustment, mounting means (22) for mounting said shaft on a seat frame structure of said seat cushion for rotation about a generally horizontal axis relative to said seat frame structure, and means (24) connecting said shaft to said one bolster, whereby the rotation of said one bolster causes said shaft to rotate about said axis to said plurality of adjustment positions defined by said incremental adjustment means.

6. The vehicle seat assembly according to claim 1, including means (55, 56, 60) for activating said adjustment mechanism in response to a predetermined condition.

7. The vehicle seat assembly according to claim 6, wherein said activating means includes solenoid means manually operable for rotating said support shaft, thereby moving said one bolster toward said full up position.

8. The vehicle seat assembly according to claim 1, including a further adjustment mechanism associated with the other one of said bolsters for providing adjustment in the position of said other bolster between a full up position, in which said other bolster provides substantial lateral support to the thigh and pelvis of an occupant of the seat, and a full down position in which the upper surface of said other bolster is located at or below the level of said cushion upper surface.

9. The vehicle seat assembly according to claim 1, wherein the seat assembly is a bench type seat (70) and said first lateral bolster is located at a first side of the bench seat and said second lateral bolster is located at a second side of the bench seat.

10. The vehicle seat assembly according to claim 1, wherein the seat assembly is a bench type seat (85) and said seat cushion having at least first and second seat portions separated by a split line with each of said seat portions having an interior cushion surface, and at least said first lateral bolster being associated with one of said seat portions and being located at the split line of the bench seat.
